# FASCICULE DE BREVET EUROPEEN

(11) **EP 1 752 819 B1**
(45) Date de publication et mention de la délivrance du brevet: **24.10.2012**
(21) Numéro de dépôt: 06118522.9
(22) Date de dépôt: 07.08.2006
(51) Int. Cl.: G02F 1/13, G09F 9/35, B60K 37/02

(54) **Dispositif incorporant un afficheur à cristaux liquides**
Eine Flüssigkristallanzeige inkorporierende Vorrichtung
Device incorporating a liquid crystal display

(30) Priorité: 08.08.2005 FR 0508418
(43) Date de publication de la demande: 14.02.2007
(73) Titulaire: MAGNETI MARELLI FRANCE, 78190 Trappes (FR)
(72) Inventeur: Forest, Jérôme, 86530 Naintre (FR); Barbier, Richard, 16160 Le Gond Pontouvre (FR); Marquet, Yves, 86220 Les Ormes (FR)
(74) Mandataire: Texier, Christian

(56) Documents cités:
- EP-A- 0 302 189
- DE-A1- 3 408 176
- DE-A1- 19 740 424
- FR-A- 2 794 273
- US-A- 5 684 549
- PATENT ABSTRACTS OF JAPAN vol. 2000, no. 21, 3 août 2001 (2001-08-03) -& JP 2001 117076 A (CITIZEN ELECTRONICS CO LTD), 27 avril 2001 (2001-04-27)

## Description

La présente invention concerne le domaine des dispositifs incorporant un afficheur plan en particulier un afficheur à cristaux liquides.

La présente invention s'applique en particulier, mais non exclusivement, au domaine des tableaux de bord pour véhicules automobiles.

L'homme de l'art sait que les afficheurs à cristaux liquides doivent être manipulés et utilisés avec précaution. De fait, les afficheurs à cristaux liquides comprennent des plaques de confinement en verre. Par conséquent, des contraintes mécaniques trop élevées peuvent les détériorer, voir en modifiant la distance séparant les plaques de confinement perturber le fonctionnement de la cellule.

L'homme de l'art sait cependant également que, malgré des tolérances de fabrication relativement importantes, il est nécessaire de positionner et maintenir les afficheurs à cristaux liquides avec précision. Ceci à la fois pour éviter leur vibration et assurer une alimentation correcte de chacune des pistes et électrodes respectives des cellules.

De nombreux dispositifs de réception et fixation d'afficheurs à cristaux liquides ont déjà été proposés.

On pourra se référer par exemple aux documents FR-A-2768838, JP-A-01-222291, JP-A-08-262988, JP-A-57-161722, DE-A-19747288, DE-U-9418791, US-A-4357061 , US-A-4422728et FR 2 794 273. Ce dernier divulgue un dispositif selon le préambule de la revendication 1.

Le but principal de la présente invention est de proposer de nouveaux moyens formant support élastique d'afficheurs à cristaux liquides, pour éviter toute vibration de ces derniers, en assurant un calage précis de ces dispositifs afficheurs, sans risque de détérioration de ceux-ci.

Un autre but auxiliaire de la présente invention est de proposer des moyens permettant de faciliter l'assemblage d'équipements incorporant des afficheurs à cristaux liquides.

Les buts précités sont atteints dans le cadre de la présente invention grâce à un dispositif tel que défini en revendication 1 annexée.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue partielle en coupe d'un dispositif conforme à la présente invention, en position de repos de la patte de commande,
- la figure 2 représente une vue partielle en perspective du même dispositif avant réception d'un afficheur à cristaux liquides,
- la figure 3 représente une vue similaire à la figure 1 en position de travail, c'est-à-dire après déformation de la patte de sollicitation par la patte de commande, et
- la figure 4 représente schématiquement un cadre avant et une pièce formant boîte à lumière, d'un tableau de bord de véhicules automobiles, susceptibles d'immobiliser un afficheur à cristaux liquides grâce aux moyens conformes à la présente invention.

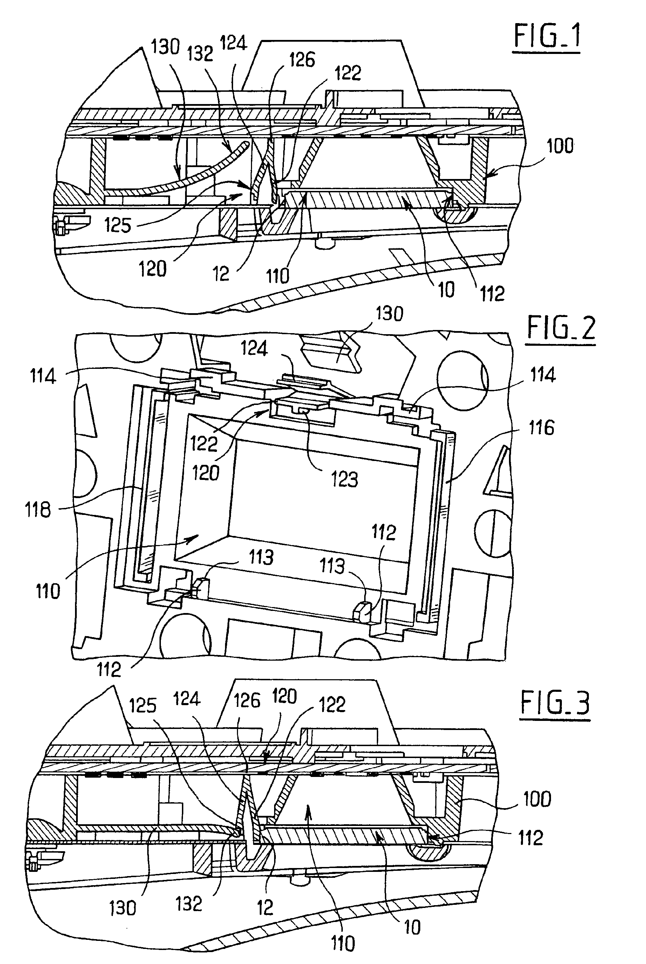

Sur les figures 1 et 3 annexées, l'afficheur à cristaux liquides est référencé schématiquement 10.

De façon classique en soi, un afficheur à cristaux liquides est formé d'une cellule de contour rectangulaire (bien que des géométries différentes puissent être utilisées). La cellule 10 comprend généralement deux plaques en verre de confinement entre lesquelles est placée une couche de molécules de matériaux cristal liquide dont l'état est commandé par une tension électrique appliquée entre des électrodes portées par les deux plaques de confinement.

Les électrodes précitées peuvent être alimentées par une bande flexible comprenant une pluralité de pistes conductrices, collée directement sur l'une des plaques de la cellule. Cependant, le plus souvent l'une des plaques de confinement de la cellule à cristaux liquides comporte une pluralité de pistes électriquement conductrices parallèles entre elles et orthogonales à un bord de la cellule, destinées à être reliées à une unité de commande par tous moyens de liaison appropriés. Ces moyens de liaison sont le plus souvent constitués d'un élément dénommé "zebra" constitué d'un bloc en élastomère formé d'un empilement alterné de couches électriquement isolantes et de couches électriquement conductrices, selon un pas inférieur à celui des pistes portées par la cellule à cristaux liquides.

La structure générale d'une telle cellule à cristaux liquides et de tels moyens de liaison électrique, étant bien connue de l'homme de l'art, ceux-ci ne seront pas décrits plus en détail par la suite.

Comme on l'a indiqué précédemment, dans le cadre de l'invention, le dispositif comprend une pièce 100 qui définit un logement 110 de réception de l'afficheur à cristaux liquides, au moins une patte élastique 120 de sollicitation placée en bordure du logement 110 et au moins une patte élastique de commande 130 placée en regard de la patte 120 élastique de sollicitation.

La pièce 100 est typiquement, mais non limitativement une pièce formant boîte à lumière, c'est à dire une pièce destinée à guider la lumière émise par des sources lumineuses, vers l'avant du tableau de bord.

La patte élastique de commande 130 est susceptible d'être déplacée entre une position de repos telle qu'illustrée sur la figure 1, dans laquelle la patte de commande 130 n'agit pas sur la patte de sollicitation 120 et celle-ci est donc distante de l'afficheur à cristaux liquides 10, et une position de travail telle qu'illustrée sur la figure 3, dans laquelle la patte de commande 130 agit sur la patte de sollicitation 120 de sorte que celle-ci prenne appui sur une tranche 12 de l'afficheur à cristaux liquides 10 pour positionner celui-ci avec précision contre une butée de référence. La butée de référence précitée est formée de préférence d'un muret ou d'un moyen équivalent telle qu'une nervure ou un doigt délimitant une partie du logement 110. Sur la figure annexée, cette butée de référence est référencée 112.

Le logement 110 possède un contour complémentaire de celui de l'afficheur à cristaux liquides 10 et de dimensions au moins légèrement supérieures à celui-ci.

En pratique, le logement 110 est défini par des murets, nervures ou doigts référencés 112, 114, 116 et 118 sur les figures annexées disposés sur la bordure d'un contour rectangulaire.

On distingue ainsi sur la figure 2 annexée, deux doigts 112, délimitant un premier bord longitudinal du logement 110. Ces deux doigts 112 possèdent des facettes 113 coplanaires et correspondent à la butée de référence précitée.

On notera que ces doigts 112 sont de préférence biseautés à leur sommet pour faciliter l'engagement de l'afficheur à cristaux liquides 10.

En regard des deux doigts précités 112, il est prévu deux doigts 114 similaires définissant le second bord longitudinal du logement.

Enfin, entre les deux paires de doigts 112 et 114 sont prévues de part et d'autre du logement 110, deux nervures parallèles 116, 118 définissant les bords transversaux du logement 110.

On aperçoit également sur la figure 2, la patte élastique de sollicitation 120 placée en bordure du logement 110, plus précisément sur le second bord longitudinal précité entre les deux nervures 114.

La patte de commande 130 est placée en regard de la patte de sollicitation 120, sur l'extérieur de celle-ci par rapport au logement 110.

La patte élastique de sollicitation 120 est formée de deux branches 122, 124 en dièdre. Les deux branches 122, 124 sont reliées au niveau d'un pied commun 126. Elles s'étendent dans une direction globalement perpendiculaire au contour d'ouverture du logement 110.

Les deux branches 122, 124 définissent ainsi un dièdre dont la concavité est dirigée comme l'ouverture du logement 110 destinée à recevoir l'afficheur à cristaux liquides 10. L'une des branches 122 est ainsi placée en regard de la tranche 12 de l'afficheur à cristaux liquides. La face de la branche 122 destinée à venir en appui contre la tranche 12 de l'afficheur à cristaux liquides 10 peut être plane. En variante, cette face de la branche 122 peut être munie d'une denture 123 comme illustrée sur la figure 2.

La seconde branche 124 est placée sur l'extérieur de la branche 122 par rapport au logement 110. Elle est de préférence munie au voisinage de son extrémité libre d'une denture 125 destinée à servir de moyens de retenu pour l'extrémité 132 de la patte de commande 130 lorsque celle-ci est déplacée en position de travail comme on le voit sur la figure 3.

La patte de commande 130 est elle-même formée d'une lame incurvée. La patte de commande 130 s'étend dans une direction globalement parallèle au contour d'ouverture du logement 110. Au repos son extrémité 132 est distante du cran formé par la denture 125 sur la branche 124 de la patte de sollicitation 120. Sa géométrie et sa longueur sont adaptées de sorte que cependant lorsque la patte de commande 130 est déformée, son extrémité 132 glisse sur la face en regard de la branche 124, sollicite celle-ci en rapprochement vers le centre du logement 110 (de sorte que la première branche 122 vienne solliciter la tranche 12 de l'afficheur à cristaux liquides 10 pour déplacer celui-ci en appui contre la butée de référence 112), puis franchisse la denture 125 pour être ainsi maintenue.

Le déplacement précité de la patte de commande peut être opéré manuellement ou automatiquement, par exemple à l'aide d'un outil sur une chaîne de fabrication ou encore à l'aide d'un accessoire venu de matière sur l'un des éléments rapportés sur l'équipement et incorporant le dispositif afficheur à cristaux liquides.

L'homme de l'art comprendra à l'examen des figures annexées, que les moyens ainsi proposés dans le cadre de la présente invention, permettent un calage élastique du dispositif afficheur à cristaux liquides 10, sans risque de détérioration de celui-ci.

De préférence, la patte de sollicitation 120 agit sur un bord longitudinal du dispositif afficheur à cristaux liquides 10 perpendiculaire au bord de l'afficheur 10 sur lequel sont prévues les pistes de contactage électrique.

Ainsi, la présente invention permet une indexation précise de ces pistes par rapport à un moyen de contactage complémentaire placé en regard, par exemple un dispositif de type "zebra" tel que décrit précédemment.

Les moyens proposés dans le cadre de la présente invention peuvent donner lieu à différentes modalités de mise en oeuvre.

Le logement 110, la patte de sollicitation 120 et la patte de commande 130 peuvent être prévues sur une pièce unique composant en elle-même l'intégralité de l'équipement.

Cependant, de préférence, dans le cadre de la présente invention, il est prévu une première pièce comportant le logement 110, la patte de sollicitation 120 et la patte de commande 130 précités et une seconde pièce présentant un berceau apte à prépositionner le dispositif afficheur à cristaux liquides 10 avant assemblage desdites deux pièces.

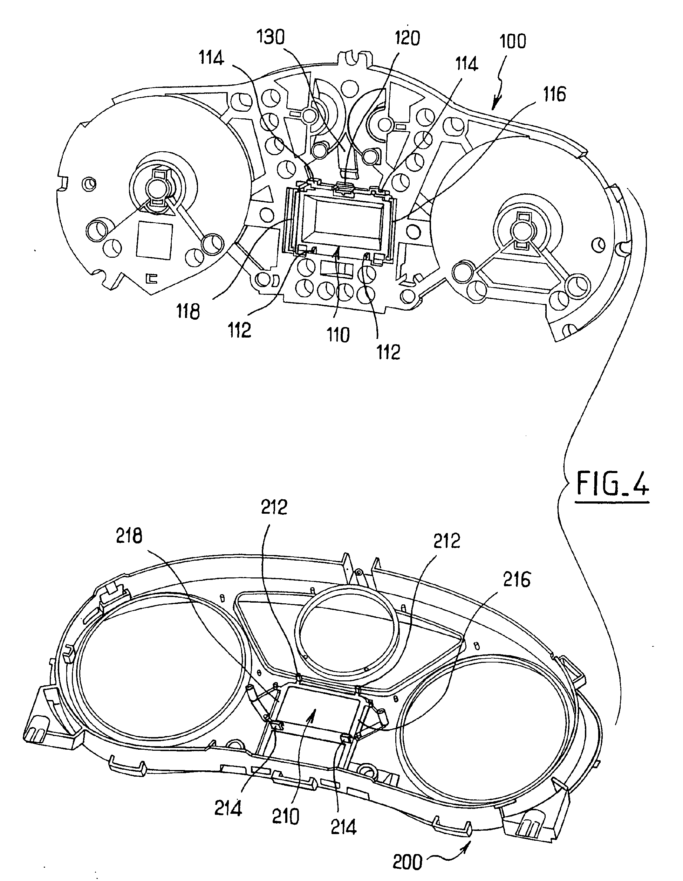

On va décrire un exemple d'une telle mise en oeuvre conforme à un mode de réalisation particulier, mais non limitatif, de la présente invention, en regard de la figure 4 annexée.

Cette mise en oeuvre concerne la réalisation d'un tableau de bord pour véhicules automobiles comprenant un cadre avant 200 et une pièce formant boîte à lumière 100. Selon cet exemple le cadre avant 200 définit un berceau 210 apte à prépositionner l'afficheur à cristaux liquides 10 tandis que la pièce 100 définit le logement 110, la patte de sollicitation 120 et la patte de commande 130 précités.

Le cas échéant, le cadre avant 200 peut être associé à un cadran non illustré sur la figure 4 pour simplifier l'illustration.

Le berceau 210 est délimité par des moyens comparables au logement 110. Il définit également un contour complémentaire de celui du dispositif afficheur à cristaux liquides 10 mais de dimensions supérieures à ce dernier. En pratique, le berceau peut être défini par des murets, nervures ou doigts placés sur le contour du berceau 210.

Plus précisément encore, selon le mode de réalisation particulier non limitatif représenté sur la figure 4, le berceau 210 est délimité par quatre paires de doigts 212, 214, 216 et 218, disposées deux à deux selon les bords du contour rectangulaire recherché pour le berceau 210.

En pratique, pour assembler le tableau de bord incorporant l'afficheur à cristaux liquides 10, on positionne en premier lieu à l'horizontal le cadre avant 200, face arrière vers le haut. Le berceau 210 est ainsi accessible. Un afficheur à cristaux liquides 10 est positionné grossièrement dans le berceau 210.

On notera que dans ce contexte, l'opérateur dispose d'un environnement confortable pour ce positionnement puisque le berceau 210 est largement surdimensionné par rapport au contour de l'afficheur à cristaux liquides 10.

Puis, la boîte à lumière 100 possédant le logement 110 et les pattes 120, 130, est superposée au cadre avant 200 en veillant à placer le logement 110 au droit de l'afficheur à cristaux liquides 10.

Les deux pièces 100 et 200 sont de préférence assemblées par tout moyen approprié, par exemple par encliquetage grâce à des structures complémentaires prévues sur le contour des deux pièces 100, 200.

Une fois l'afficheur à cristaux liquides 10 ainsi positionné dans le logement 110 il suffit de déformer la patte de commande 130 pour agir sur la patte de sollicitation 120 et déplacer sa branche 122 contre la tranche 12 de l'afficheur à cristaux liquides 10 pour caler celui-ci contre la butée de référence 112.

Comme on l'a indiqué précédemment, cette déformation de la patte de commande 130 peut être opérée manuellement par un opérateur ou encore automatiquement à l'aide d'un outil ou encore d'un accessoire ou élément venu de matière sur une pièce complémentaire de l'équipement, par exemple un doigt solidaire d'un capot arrière destiné à être rapporté sur la face arrière de la pièce de lumière 100.

De préférence, les différentes pièces intervenant dans la présente invention, en particulier la boîte à lumière 100 qui présente le logement 110 et les pattes 120, 130, ainsi que le cadre avant 200, sont tous réalisés en matériau thermoplastique. L'invention exploite l'élasticité intrinsèque du matériau thermoplastique pour autoriser les déformations de la patte de sollicitation 120 et de la patte de commande 130.

Bien entendu la présente invention n'est pas limitée au mode de réalisation particulier qui vient d'être décrit.

En particulier, la présente invention n'est pas limitée à la réalisation de tableaux de bord.

L'homme de l'art comprendra à la lecture de la description détaillée qui précède que la présente invention permet d'assurer un bon positionnement de l'afficheur à cristaux liquides 10. La présente invention permet également d'assurer la tenue et le centrage de l'afficheur à cristaux liquides 10 tout au long de la durée de vie et d'utilisation du dispositif. La présente invention permet d'éviter tout risque de détérioration de l'afficheur à cristaux liquides. La présente invention s'avère par ailleurs particulièrement économique notamment par rapport à des solutions antérieures connues utilisant des pièces de maintien métalliques pour l'afficheur.

On notera que de préférence, comme on le voit sur les figures 3 et 4, la pièce 100 possède de préférence des cloisons spécifiques formant boîte à lumière aptes à diriger la lumière provenant d'une source optique, vers la face arrière de l'afficheur à cristaux liquides 10, lesdites parois précitées ayant la forme d'un tronc de pyramide et débouchant sur le contour du logement 110.

## Revendications

1. Dispositif incorporant un afficheur à cristaux liquides (10), comportant des moyens définissant un logement (110) de réception de l'afficheur, au moins une patte élastique (120) de sollicitation placée en bordure du logement (110) et au moins une patte élastique (130) de commande placée en regard de la patte élastique de sollicitation (120) et susceptible d'être déplacée entre une positon de repos et une position de travail dans laquelle la patte de commande (130) agit sur la patte de sollicitation (120) de sorte que celle-ci prenne appui sur une tranche (12) de l'afficheur à cristaux liquides (10) pour positionner celui-ci avec précision contre une butée de référence (112), **caractérisé en ce que** la patte de commande (130) est formée d'une lame incurvée au repos, la patte de sollicitation (120) comprend deux branches (122, 124) en dièdre définissant une concavité orientée dans la même direction que l'ouverture du logement (110), et
le logement (110), la patte élastique de sollicitation (120) et la patte élastique de commande (130) sont venus de matière sur une pièce commune (100).

2. Dispositif selon la revendication 1 , **caractérisé par le fait que** la pièce (100) formant le logement (110), la patte élastique de sollicitation (120) et la patte élastique de commande (130) est réalisée en matériau thermoplastique.

3. Dispositif selon l'une des revendications 1 ou 2, **caractérisé par le fait que** la face de la patte de sollicitation (120) dirigée vers l'afficheur à cristaux liquides (10) possède une nervure (123).

4. Dispositif selon l'une des revendications 1 à 3, **caractérisé par le fait que** la patte élastique de sollicitation (120) possède une denture (125) apte à servir de verrouillage pour l'extrémité (132) de la patte de commande (130).

5. Dispositif selon l'une des revendications 1 à 4, **caractérisé par le fait que** la patte de sollicitation (120) est placée sur un bord longitudinal du logement (110) qui est perpendiculaire à un bord du dispositif afficheur à cristaux liquides (10) sur lequel débouchent des pistes de connexion électrique.

6. Dispositif selon l'une des revendications 1 à 5, **caractérisé par le fait que** la butée de référence (112) est formée par un élément délimitant le logement (110).

7. Dispositif selon l'une des revendications 1 à 6, **caractérisé par le fait que** le logement (110) est délimité par des moyens (112, 114, 116, 118) du type muret, nervure ou doigt.

8. Dispositif selon l'une des revendications 1 à 7, **caractérisé par le fait que** le logement (110), la patte de sollicitation (120) et la patte de commande (130) sont formés sur une boîte à lumière (100) d'un tableau de bord de véhicules automobiles.

9. Dispositif selon l'une des revendications 1 à 8, **caractérisé par le fait qu'**il comprend en outre une seconde pièce (200) définissant un berceau (210) apte à prépositionner l'afficheur à cristaux liquides (10) avant son engagement dans le logement (110).

10. Dispositif selon la revendication 9, **caractérisé par le fait que** la seconde pièce est formée du cadre avant d'un tableau de bord de véhicules automobiles.

11. Dispositif selon l'une des revendications 1 à 10, **caractérisé par le fait que** la patte de commande (130) est adaptée pour être déplacée manuellement.

12. Dispositif selon l'une des revendications 1 à 10, **caractérisé par le fait que** la patte de commande (130) est adaptée pour être déplacée par un outil.

13. Dispositif selon l'une des revendications 1 à 10, **caractérisé par le fait que** la patte de commande (130) est adaptée pour être déplacée par un élément venu de matière sur un accessoire rapporté sur le dispositif, par exemple un capot arrière de tableau de bord de véhicule automobile.

## Claims

1. A device incorporating a liquid crystal display (10) comprising means defining a housing (110) to receive the display, at least one elastically urging lug (120) placed on the edge of the housing (110) and at least one elastic controlling lug (130) placed facing the elastically urging lug (120) and able to be moved between a rest position and a working position in which the controlling lug (130) acts on the urging lug (120) so that the latter bears upon an edge (12) of the liquid crystal display (10) for precise positioning thereof against a reference abutment (112), **characterized in that** the controlling lug (130) is formed of a curved blade at rest, the urging lug (120) comprises two branches (122, 124) forming a dihedron and defining a concavity oriented in the same direction as the opening of the housing (110), and the housing (110), the elastically urging lug (120) and the elastic controlling lug (130) are made in one piece on a common part (100).

2. The device according to claim 1 **characterized by** the fact that the part (100) forming the housing (110), the elastically urging lug (120) and the elastic controlling lug (130) is made in thermoplastic material.

3. The device according to one of claims 1 or 2, **characterized by** the fact that the surface of the urging lug (120) directed towards the liquid crystal display (10) has a ridge (123).

4. The device according to one of claims 1 to 3, **characterized in that** the elastically urging lug (120) has teeth (125) capable of acting as lock for the end (132) of the controlling lug (130).

5. The device according to one of claims 1 to 4, **characterized in that** the urging lug (120) is placed on a longitudinal edge of the housing (110) which is perpendicular to an edge of the liquid crystal display device (10) onto which electric connection lines are directed.

6. The device according to one of claims 1 to 5, **characterized in that** the reference abutment (112) is formed by an element delimiting the housing (110).

7. The device according to one of claims 1 to 6, **characterized in that** the housing (110) is delimited by means (112, 114, 116, 118) of kerb, ridge or finger type.

8. The device according to one of claims 1 to 7, **characterized in that** the housing (110), the urging lug (120) and the controlling lug (130) are formed on a light box (100) of a motor vehicle dashboard.

9. The device according to one of claims 1 to 8, **characterized in that** it further comprises a second part (200) defining a cradle (210) capable of pre-positioning the liquid crystal display (10) before it engages into the housing (110).

10. The device according to claim 9, **characterized in that** the second part is formed by the front frame of a motor vehicle dashboard.

11. The device according to one of claims 1 to 10, **characterized in that** the controlling lug (130) is adapted so that it can be moved manually.

12. The device according to one of claims 1 to 10, **characterized in that** the controlling lug (130) is adapted to be moved by a tool.

13. The device according to one of claims 1 to 10, **characterized in that** the controlling lug (130) is adapted to be moved by an element made in one same piece with an accessory added to the device, for example a rear cover for motor vehicle dashboard.

## Patentansprüche

1. Vorrichtung, in die eine Flüssigkristallanzeige (10) integriert ist, umfassend Mittel, die einen Sitz (110) für die Aufnahme der Anzeige bilden, mindestens eine elastische Beaufschlagungslasche (120), die am Rand des Sitzes (110) angeordnet ist, und mindestens eine elastische Betätigungslasche (130), die der elastischen Beaufschlagungslasche (120) gegenüber angeordnet ist und zwischen einer Ruhestellung und einer Arbeitsstellung bewegbar ist, in der die Betätigungslasche (130) auf die Beaufschlagungslasche (120) einwirkt, so dass sich diese auf einem Rand (12) der Flüssigkristallanzeige (10) abstützt, um diese genau gegen einen Referenzanschlag (112) zu positionieren, **dadurch gekennzeichnet, dass** die Betätigungslasche (130) von einer Zunge gebildet ist, die in Ruhestellung gekrümmt ist, dass die Beaufschlagungslasche (120) zwei Schenkel (122, 124) in V-Form umfasst, die eine in die gleiche Richtung wie die Öffnung des Sitzes (110) gerichtete Konkavität bilden, und dass der Sitz (110), die elastische Beaufschlagungslasche (120) und die elastische Betätigungslasche (130) einstückig an einem gemeinsamen Teil (100) gebildet sind.

2. Vorrichtung nach Anspruch 1, **dadurch gekennzeichnet, dass** das Teil (100), das den Sitz (110), die elastische Beaufschlagungslasche (120) und die elastische Betätigungslasche (130) bildet, aus thermoplastischem Material hergestellt ist.

3. Vorrichtung nach einem der Ansprüche 1 oder 2, **dadurch gekennzeichnet, dass** die Seite der Beaufschlagungslasche (120), die zur Flüssigkristallanzeige (10) hin gerichtet ist, eine Rippe (123) aufweist.

4. Vorrichtung nach einem der Ansprüche 1 bis 3, **dadurch gekennzeichnet, dass** die elastische Beaufschlagungslasche (120) eine Zahnung (125) aufweist, die dafür geeignet ist, als Verriegelung für das Ende (132) der Betätigungslasche (130) zu dienen.

5. Vorrichtung nach einem der Ansprüche 1 bis 4, **dadurch gekennzeichnet, dass** die Beaufschlagungslasche (120) an einem Längsrand des Sitzes (110) angeordnet ist, der senkrecht zu einem Rand der Flüssigkristallanzeige (10) ist, an dem elektrische Anschlussleitungen ausmünden.

6. Vorrichtung nach einem der Ansprüche 1 bis 5, **dadurch gekennzeichnet, dass** der Referenzanschlag (112) von einem Element gebildet ist, das den Sitz (110) begrenzt.

7. Vorrichtung nach einem der Ansprüche 1 bis 6, **dadurch gekennzeichnet, dass** der Sitz (110) durch Mittel (112, 114, 116, 118) vom Typ Trennwand, Rippe oder Finger begrenzt ist.

8. Vorrichtung nach einem der Ansprüche 1 bis 7, **dadurch gekennzeichnet, dass** der Sitz (110), die Beaufschlagungslasche (120) und die Betätigungslasche (130) an einem Beleuchtungsblock (100) eines Kraftfahrzeug-Armaturenbretts gebildet sind.

9. Vorrichtung nach einem der Ansprüche 1 bis 8, **dadurch gekennzeichnet, dass** sie ferner ein zweites Teil (200) umfasst, das ein Gestell (210) bildet, das dafür geeignet ist, die Flüssigkristallanzeige (10) vor ihrem Einsetzen in den Sitz (110) vorzupositionieren.

10. Vorrichtung nach Anspruch 9, **dadurch gekennzeichnet, dass** das zweite Teil von dem vorderen Rahmen eines Kraftfahrzeug-Armaturenbretts gebildet ist.

11. Vorrichtung nach einem der Ansprüche 1 bis 10, **dadurch gekennzeichnet, dass** die Betätigungslasche (130) dafür geeignet ist, manuell bewegt zu werden.

12. Vorrichtung nach einem der Ansprüche 1 bis 10, **dadurch gekennzeichnet, dass** die Betätigungslasche (130) dafür geeignet ist, durch ein Werkzeug bewegt zu werden.

13. Vorrichtung nach einem der Ansprüche 1 bis 10, **dadurch gekennzeichnet, dass** die Betätigungslasche (130) dafür geeignet ist, durch ein Element bewegt zu werden, das einstückig an einem an der Vorrichtung angeordneten Hilfsmittel gebildet ist, zum Beispiel an einer hinteren Haube des Kraftfahrzeug-Armaturenbretts.
